# NEUE EUROPÄISCHE PATENTSCHRIFT

(11) **EP 2 441 103 B2**
(45) Veröffentlichungstag und Bekanntmachung des Hinweises auf die Entscheidung über den Einspruch: **12.09.2018**
(45) Hinweis auf die Patenterteilung: 30.07.2014
(21) Anmeldenummer: 10721820.8
(22) Anmeldetag: 08.06.2010
(51) Int. Cl.: H01M 2/20, H01M 2/22, H01M 2/32, H01R 11/28, H01R 13/03, H01M 10/052

(54) **BATTERIEZELLENVERBINDER**
BATTERY CELL CONNECTOR
CONNECTEUR D'ÉLÉMENTS DE BATTERIE

(30) Priorität: 08.06.2009 DE 102009024513; 21.09.2009 DE 202009012647 U; 20.04.2010 DE 102010015810
(43) Veröffentlichungstag der Anmeldung: 18.04.2012
(73) Patentinhaber: Auto-Kabel Management GmbH, 79688 Hausen i.W. (DE); Bayerische Motoren Werke Aktiengesellschaft, 80809 München (DE)
(72) Erfinder: LIETZ, Franz-Josef, 46049 Oberhausen (DE); GROßE, Jürgen, 41238 Mönchengladbach (DE); KLINKNER, Adelheid, 41460 Neuss (DE)
(74) Vertreter: Cohausz & Florack
(86) Internationale Anmeldenummer: PCT/EP2010/058007
(87) Internationale Veröffentlichungsnummer: WO 2010/142679

(56) Entgegenhaltungen:
- EP-A1- 1 077 497
- EP-A2- 1 313 156
- EP-A2- 1 333 511
- WO-A1-89/04065
- WO-A1-2009/041735
- WO-A1-2010/012322
- WO-A2-2008/098193
- DE-A1- 3 033 117
- DE-A1-102006 050 705
- DE-U1-202009 012 647
- JP-A- 2002 151 045
- US-A- 4 118 097
- US-A1- 2004 166 727
- US-A1- 2005 100 785
- US-A1- 2006 032 667
- US-B1- 6 240 637

## Beschreibung

Der Gegenstand betrifft einen Batteriezellenverbinder mit einem ersten zum Anschluss an einen Batteriepol einer ersten Batterie gebildeten Anschlussteil, einem zweiten Anschlussteil und einem zwischen den Anschlussteilen angeordneten, die Anschlussteile elektrisch miteinander kontaktierenden Verbindungsteil. Darüber hinaus betrifft der Gegenstand ein Verfahren zur Herstellung eines solchen Batteriezellenverbinders als auch ein System mit einem Batteriezellenverbinder und einer Mehrzahl von Batterien.

Batterien, insbesondere Lithium-Ionen-Batterien, jedoch auch Metall-Hydrid Batterien, wie Nickel-Metall-Hydrid Batterien, oder Lithium Polymer Batterien oder andere chemische Energiespeicher, erlangen in der Automobilindustrie einen immer höheren Stellenwert. Insbesondere durch den Bedarf an alternativen Antriebskonzepten, beispielsweise Hybridantrieben oder reinen Elektroantrieben, ist die Speicherung von elektrischer Energie von immenser Bedeutung für den zukünftigen Automobilbau.

Die Verwendung von neuartigen Batterien, z.B. Lithium-Ionen-Batterien, als elektrischer Energiespeicher für Elektromotoren im Automobilbau hat sich als vorteilhaft erwiesen. Zum Einen speichern diese Akkumulatoren eine große Energiemenge bei kleinem Volumen und zum Anderen unterliegen solche Batterien nur bedingt einem Alterungsprozess. Insbesondere ein "Memory- Effekt" stellt sich bei diesem nicht ein. Dadurch können eine Vielzahl von Ladezyklen stattfinden, so dass die Lebensdauer der Batterien der eines Fahrzeugs im Wesentlichen entspricht.

Die meisten Batterien stellen jedoch nur geringe Spannungen zwischen einem und mehreren zehn Volt zur Verfügung. Diese geringen Spannungen reichen bei weitem nicht aus, um einen Elektromotor eines Elektrofahrzeugs anzutreiben. Darüber hinaus stellen die meisten Batterien elektrische Ladung nur zwischen 1000 und 5000 mAh zur Verfügung, was nicht ausreicht, um ein Fahrzeug ausreichend lange anzutreiben. Aus diesem Grunde werden Batterien zu sogenannten Batteriepacks zusammengeschaltet. Hierbei können eine Mehrzahl von einzelnen Batterien (Zellen) miteinander in Reihe geschaltet werden, wodurch sich die Ausgangsspannung der Batteriepacks entsprechend der Anzahl der in Reihe geschalteten Batterien multipliziert. Vorzugsweise werden Batteriepacks mit insgesamt 96 Batterien eingesetzt. Hierbei werden beispielsweise acht Module mit jeweils zwölf Batterien miteinander verschaltet. Pro Modul werden beispielsweise sechs vertikal übereinander angeordnete Batterien in einer Spalte miteinander in Serie verschaltet. Eine solche Spalte wird in Serie mit einer zweiten horizontal daneben angeordneten Spalte des selben Moduls in Serie verschaltet. Somit ergibt sich beispielsweise bei einer Ausgangsspannung von 4 V pro Batterie eine Gesamtausgangsspannung von 4 V mal 12 Batterien zu 48 V pro Modul und pro Batteriepack 384 V.

Problematisch bei dem Aufbau eines Moduls ist jedoch die Kontaktierung von jeweils zwei in Reihe zu schaltenden Batterien an ihren jeweils gegenpoligen Polen. Zum einen ist aufgrund der chemischen Energiespeicherung in den Batterien der Batteriepol einer ersten Polarität aus einem anderen Metall als der Batteriepol einer zweiten Polarität der selben Batterie. Beispielsweise ist bei Lithium-Ionen-Batterien ein Batteriepol aus Stahl und ein zweiter Batteriepol aus Aluminium. Andere Kombinationen von Metallen sind jedoch auch üblich. Bei den meisten Arten von Batterien ist zu beobachten, dass die Pole unterschiedlicher Polarität aus unterschiedlichen Metallen hergestellt sind.
Die EP 1 077 497 A1 beschreibt eine als Flachteil gebildete Batterieleitung, bei der ein Aluminiumband als Hauptkörper verwendet wird. An diesen Hauptkörper angeschlossen sind Anschlusskörper aus einem von Aluminium verschiedenen Metall. Mit Hilfe der Anschlusskörper wird die Leitung an Batteriezellen oder Teile davon angeschlossen.
Die WO 2008/098193 A2 betrifft ebenfalls einen als Flachteil gebildeten Zellverbinder für Batteriezellen. Der beschriebene Zellverbinder hat einen Bogen, der Vibrationen zwischen den Zellen oder Fertigungstoleranzen ausgleicht. Auf den Zellverbinder sind Isolatoren aufgebracht, um Kurzschlüsse zu verhindern.

Darüber hinaus ist durch produktionsbedingte Schwankungen bei der Produktion von Batterien der Abstand zwischen zwei gegenüberliegenden Polen toleranzbehaftet. Das heißt, dass wenn zwei Batterien nebeneinander im Wesentlichen in einer Ebene angeordnet sind, die Pole nicht exakt koplanar sein können. Auch ist häufig der Pluspol einer Batterie durch einer. Vorsprung auf dem einen Batteriedeckel gebildet und der Minuspol durch einen Rücksprung auf dem gegenüberliegenden Deckel der Batterie. Will man nun einen Pluspol einer ersten Batterie mit einem Minuspol einer zweiten Batterie verbinden, so muss zum Einen der Verwendung der unterschiedlichen Metalle Rechnung getragen werden und zum Anderen der toleranzbedingten Abweichung der Pole zueinander.

Darüber hinaus ist der Stromfluss durch die Kontakte sehr hoch, da eine Vielzahl von Batterien in Reihe geschaltet werden, welche im Belastungsfall mehrere Ampere, eventuell sogar mehrere zehn Ampere oder mehrere einhundert Ampere, zur Verfügung stellen. Diese hohen Ströme müssen durch alle Batterien und die jeweiligen Batteriezellenverbinder fließen. Die elektrischen Kontaktierungen der Batteriepole an die Batteriezellenverbinder müssen daher niederohmig sein, um die Verlustwärme in den Verbindern zu minimieren. Daher muss eine saubere elektrische Kontaktierung über die gesamte Lebensdauer des Batteriemoduls gewährleistet werden. Um dies zu gewährleisten, werden die Batteriezellenverbinder regelmäßig mit den Batteriepolen stoffschlüssig verbunden.

Bei den bekannten Batteriemodulen ergibt sich nunmehr das Problem, einen geringen Übergangswiderstand zwischen einem Batteriepol und einem Batteriezellenverbinder unter Berücksichtigung der verschiedenen Metalle der Batteriepole zu etablieren. Darüber hinaus ergibt sich das Problem, Toleranzen der Batterielängen auszugleichen. Auch ergibt sich das Problem, eine Vielzahl von Batterien in einem einfach handhabbaren Arbeitsschritt elektrisch und stoffschlüssig miteinander zu kontaktieren.

Bei den bekannten Batteriemodulen ergibt sich auch das Problem, dass insbesondere in einem Fahrzeug während des Betriebs hohe Scher- / Druck- und/oder Zugkräfte auf den Zellenverbinder wirken, die dazu führen können, dass die Verbindungen zwischen den Zellenverbindern und den Batteriepolen zerstört werden können. Auch bei der Montage treten diese Kräfte auf. Daher lag dem Gegenstand die weitere Aufgabe zugrunde, einen Zellenverbinder zur Verfügung zu stellen, der die auftretenden Kräfte aufnehmen kann und eine Einkoppelung der Kräfte in die Verbindungsstellen mit den Battieriepolen reduziert.

Diese Aufgabe wird durch einen Batteriezellenverbinder nach einem der unabhängigen Ansprüche gelöst.

Unter anderem wird vorgeschlagen, dass das erste Anschlussteil zumindest an der einem Batteriepol zugewandten Seite aus einem ersten elektrisch leitenden Material gebildet ist und dass an dem zweiten Anschlussteil ein zum Anschluss an einen zweiten Batteriepol gebildetes, zumindest an der dem zweiten Batteriepol zugewandten Seite aus einem zweiten von dem ersten elektrisch leitenden Material verschiedenen elektrisch leitenden Material gebildetes Flachstück stoffschlüssig angeordnet ist.

Es ist erkannt worden, dass Verbindungen zwischen Batteriezellenverbindern und Batteriepolen dann mit einem geringen Übergangswiderstand möglich sind, wenn den unterschiedlichen Materialien der gegenpoligen Batteriepole Rechnung getragen wird. Hierzu kann ein sortenreiner Übergang zwischen Zellenverbinder und Batteriepol gewählt werden. Ein erstes Anschlussteil, welches mit einem ersten Batteriepol verbunden wird, kann aus einem ersten elektrisch leitenden Material gebildet sein. Der Batteriezellenverbinder verbindet das erste Anschlussteil über das Verbindungsteil mit dem zweiten Anschlussteil. An dem zweiten Anschlussteil soll elektrisch ein zum ersten Batteriepol gegenpoliger Pol einer zweiten Batterie angeschlossen werden. Da dieser gegenpolige Batteriepol aus einem anderen Material ist als der erste Batteriepol, muss auch das in elektrischem und mechanischem Kontakt mit diesem Pol tretende Material ein anderes sein, um einen geringen Übergangswiderstand zu gewährleisten.

Um einen kostengünstigen Batteriezellenverbinder zur Verfügung zu stellen, wird daher vorgeschlagen, dass an dem zweiten Anschlussteil ein Flachstück stoffschlüssig, z.B. verschweißt angeordnet ist. Das Flachstück ist dabei aus einem zweiten elektrisch leitenden Material. Bevorzugt ist das erste Anschlussteil aus dem selben Material wie der erste Batteriepol der ersten Batterie und das Flachstück aus dem selben Material wie der zweite Batteriepol der zweiten Batterie.

Beispielhaft kann der erste Batteriepol aus Aluminium gebildet sein. In diesem Fall kann zumindest die Oberfläche des ersten Anschlussteils ebenfalls aus Aluminium gebildet sein. Der gegenpolige Pol der zweiten Batterie kann beispielsweise aus Stahl gebildet sein. In diesem Fall kann das Flachstück zumindest an der Oberfläche aus Stahl gebildet sein. Über das Verbindungsteil ist der erste Anschlussteil mit dem zweiten Anschlussteil und respektive dem Flachstück elektrisch verbunden, und Strom kann über den Batteriezellenverbinder zwischen den Batteriepolen der zwei Batterien fließen.

Insbesondere ist das aus Aluminium gebildete Anschlussteil weichgeglüht. Das Anschlussteil kann aus einem weichgeglühtem Aluminiumblech oder Band geformt sein. Das Weichglühen des Aluminiums des Anschlussteils bewirkt eine erhöhte Elastizität des Anschlussteils, wodurch insbesondere die axiale Ausgleichsfähigkeit erhöht wird. Axiale Bewegungen der Batterei können somit ausgeglichen werden. Auch kann das Verbindungsteil aus weichgeglühtem Aluminium gebildet sein. Insbesondere kann das Weichglühen zwischen 200 und 600 °C, bevorzugt bei 400° erfolgen. Insbesondere kann das Weichglühen unter Schutzgasatmosphäre erfolgen.

Gemäß einem vorteilhaften Ausführungsbeispiel wird vorgeschlagen, dass die der Batterie zugewandte Fläche des Flachstücks mit dem ersten Anschlussteil koplanar ist. In einem Batteriemodul werden die Batterien vorzugsweise derart angeordnet, dass die gegenpoligen Pole von nebeneinander angeordneten Batterien im Wesentlichen in einer Ebene angeordnet sind. Um nun diese im Wesentlichen in einer Ebene liegenden Pole miteinander zu verbinden, sind die Flächen des Flachstücks und des ersten Anschlussteils koplanar.

Es sei erwähnt, dass diese Koplanarität durch eine Flexibilität des Verbindungsteils beim Kontaktieren aufgehoben werden kann. Beispielsweise kann der Batteriezellenverbinder mit einem Werkzeug gegen die Batteriepole beim stoffschlüssigen Verbinden des Anschlussteils und des Flachstücks an die jeweiligen Batteriepole gedrückt werden. Hierdurch können toleranzbedingte Abweichungen zwischen den Polen ausgeglichen werden, insbesondere kann der Batteriezellenverbinder in einem Toleranzbereich verschoben werden.

Gemäß einem vorteilhaften Ausführungsbeispiel wird vorgeschlagen, dass das erste und/oder das zweite Anschlussteil als Flachteil gebildet ist. Darüber hinaus kann auch das Flachstück als Flachteil gebildet sein. Durch die Ausgestaltung als Flachteil können die Anschlussteile bei geringem Raumbedarf eng an den Enden der Batterien angeordnet werden.

Gemäß einem vorteilhaften Ausführungsbeispiel wird auch vorgeschlagen, dass das Verbindungsteil einstückig mit dem ersten und/oder dem zweiten Anschlussteil gebildet ist. Dadurch ist es möglich, besonders kostengünstig den Batteriezellenverbinder herzustellen. Beispielsweise kann das erste Anschlussteil, das zweite Anschlussteil und das Verbindungsteil aus dem selben Material gebildet werden. Beispielsweise kann das erste Anschlussteil, das Verbindungsteil und das Anschlussteil aus einem Blech oder einem Band gestanzt werden. Dadurch können in einem einzigen Arbeitsschritt das erste und zweite Anschlussteil sowie das Verbindungsteil kostengünstig hergestellt werden.

Gemäß einem vorteilhaften Ausführungsbeispiel wird vorgeschlagen, dass zumindest ein Anschlussteil aus Aluminium, Zinn, Zink, Kupfer, Nickel, Silber, Gold, Eisen, Stahl oder Legierungen davon gebildet oder damit beschichtet ist. Anschlussteile können aus Vollmaterial aus einem der genannten Metalle oder Legierungen davon hergestellt sein. Auch ist es möglich, dass die Anschlussteile aus einem ersten Metall gebildet sind und mit einem zweiten Metall oder Legierungen davon beschichtet sind. Insbesondere um eine gute elektrische Kontaktierung zu gewährleisten, kann beispielsweise eine Silberbeschichtung vorgesehen sein. Jedoch muss bei der Auswahl des Materials am Anschlussteilmantel darauf geachtet werden, dass dieses Material zu dem Material des daran anzuschließenden Batteriepols korrespondiert, so dass keine galvanische Zelle am Übergang entsteht, welche die stoffschlüssige Verbindung zerstören könnte oder einen zu hohen Übergangswiderstand aufweist.

Gemäß einem vorteilhaften Ausführungsbeispiel wird vorgeschlagen, dass das Flachstück aus Stahl, Zinn, Zink, Kupfer, Nickel, Eisen, Aluminium, Silber, Gold oder Legierungen davon gebildet oder damit beschichtet ist. Entsprechend der Ausgestaltung der Anschlussteile kann auch das Flachstück entweder aus einem Vollmaterial sein oder mit einem geeigneten Metall beschichtet sein.

Gemäß einem vorteilhaften Ausführungsbeispiel wird vorgeschlagen, dass das Flachstück mit dem zweiten Anschlussteil verschweißt ist. Hierbei kann ein Reibschweißverfahren verwendet werden. Beispielsweise kann ein Ultraschallschweißverfahren zur Kontaktierung des Flachstücks mit dem Anschlussteil verwendet werden. Jedoch ist auch ein Rührreibschweißen, ein torsionales Reibschweißen, ein Rotationsreibschweißen oder ein sonstiges Reibschweißverfahren denkbar. Auch kann ein Multi-Orbital-Reibschweißverfahren verwendet werden. Darüber hinaus kann das Flachstück mit dem Anschlussteil auch mittels eines Widerstandsschweißverfahrens stoffschlüssig verbunden werden.

Für einen Toleranzausgleich zwischen dem Flachstück und dem ersten Anschlussteil bei Anordnung der zu verbindenden Batteriepole in unterschiedlichen Ebenen wird vorgeschlagen, dass das Verbindungsteil flexibel ausgestaltet ist.

Eine solche Flexibilität kann beispielsweise dadurch erreicht werden, dass das Verbindungsteil voneinander beabstandete Rippen aufweist. Hierbei können eine Mehrzahl von einzelnen Rippen als Verbindungsstege zwischen den Anschlussteilen gebildet sein. Die einzelnen Rippen sind voneinander beabstandet und haben einen Zwischenraum. Hierdurch wird eine erhöhte Flexibilität des Verbindungsteils erreicht.

Insbesondere eine Verwendung von wellenförmigen Rippen in dem Verbindungsteil gemäß einem vorteilhaften Ausführungsbeispiel gewährleistet die benötigte Flexibilität zwischen den Anschlussteilen durch das Verbindungsteil.

Gemäß einem vorteilhaften Ausführungsbeispiel wird vorgeschlagen, dass die Rippen koplanar zumindest zu der der Batterie abgewandten Seite des ersten Anschlussteils und/oder des zweiten Anschlussteils sind. Hierbei verlaufen die Rippen in der gleichen Ebene wie das erste und/oder das zweite Anschlussteil.

Gemäß einem vorteilhaften Ausführungsbeispiel wird auch vorgeschlagen, dass die Rippen aus der Ebene zumindest eines Anschlussteils herausragend geformt sind. Die Rippen können beispielsweise einerseits in der Ebene eines Anschlussteils wellenförmig geformt sein, so dass die Rippen aus der Ebene des Anschlussteils nicht herausragen. Jedoch ist es auch möglich, dass die Rippen aus einer Ebene eines Anschlussteils herausragen, beispielsweise nach oben und nach unten. Beide Rippenformen bieten die benötigte Flexibilität, wobei die Rippen, die aus der Ebene der Anschlussteile herausragen, eine erhöhte Flexibilität normal zur Ebene eines Anschlussteils gewährleisten, und Rippen, die in der Ebene der Anschlussteile verlaufen, eine erhöhte Flexibilität in der Ebene eines Anschlussteils gewährleisten können.

Gemäß einem vorteilhaften Ausführungsbeispiel wird auch vorgeschlagen, dass die Rippen mittels eines der Verfahren Stanzen, Schneiden, Laserschneiden, Wasserstrahlschneiden aus dem Verbindungsteil geformt sind. Wie zuvor erläutert, kann das Verbindungsteil mit den beiden Anschlussteilen aus einem Blech oder Band gestanzt werden. Gleichzeitig können beispielsweise die Rippen gestanzt werden. Auch ist es möglich, dass die Rippen aus dem Verbindungsteil geschnitten werden, derart, dass die Abstände zwischen den Rippen in dem Verbindungsteil geformt werden.

Gemäß einem vorteilhaften Ausführungsbeispiel wird auch vorgeschlagen, dass das Verbindungsteil aus zumindest zwei Folien, insbesondere Metallfolien oder beschichtete Folien, gebildet ist. Zwei oder mehr Folien, beispielsweise auch zehn Folien, können übereinander gelagert werden und das Verbindungsteil bilden. An den jeweiligen Enden der Folien können diese mit den Anschlussteilen stoffschlüssig verbunden sein, so dass ein Stromfluss vom einen Anschlussteil über die Folien zum anderen Anschlussteil möglich ist. Die Folien bieten den Vorteil, dass diese eine erhöhte Flexibilität gewährleisten und einfach anzubringen sind.

Gemäß einem vorteilhaften Ausführungsbeispiel wird auch vorgeschlagen, dass das Verbindungsteil aus einem der Materialien Aluminiumlitzen, Kupferlitzen, Aluminiumgeflecht, oder Kupfergeflecht gebildet ist. Neben der Verwendung von Folien können auch eine Vielzahl von Litzen oder Geflechte als Verbindungsteil verwendet werden. Diese Litzen oder Geflechte können an ihren jeweiligen Enden stoffschlüssig mit den Anschlussteilen verbunden werden.

Für eine stoffschlüssige Verbindung der Litzen, Geflechte oder Folien an den Anschlussteilen wird vorgeschlagen, dass das Verbindungsteil zumindest teilweise im Bereich eines Anschlussteils kompaktiert ist. Kompaktieren kann bedeuten, dass die einzelnen Schichten oder Litzen derart verpresst sind, dass diese im Wesentlichen keinen Luftzwischenraum aufweisen. Kompaktieren kann beispielsweise durch kurzzeitiges Verpressen und Erhitzen erreicht werden. Kompaktierte Folien, kompaktierte Litzen bzw. kompaktierte Geflechte lassen sich mit einem Werkzeug in besonders einfacher Weise stoffschlüssig mit den Anschlussteilen verbinden. Insbesondere ein Reibschweißverfahren, ein Widerstandsschweißverfahren oder ein Ultraschallschweißverfahren kann bei Kompaktierung der Enden des Verbindungsteils im Bereich der Anschlussteile angewandt werden.

Gemäß einem vorteilhaften Ausführungsbeispiel wird vorgeschlagen, dass das Verbindungsteil zumindest teilweise im Bereich zumindest eines Anschlussteils stoffschlüssig mit dem Anschlussteil verbunden ist. Diese stoffschlüssige Verbindung kann, wie zuvor erläutert, mittels Schweißen erzielt werden. Durch die stoffschlüssige Verbindung wird erreicht, dass der Übergangswiderstand zwischen Anschlussteil und Verbindungsteil gering ist und somit eine Wärmeentwicklung durch Verlustleistung minimiert wird.

Gemäß einem vorteilhaften Ausführungsbeispiel wird auch vorgeschlagen, dass das Verbindungsteil, das erste Anschlussteil und/oder das zweite Anschlussteil einen Versatz zwischen einer Ebene des ersten Anschlussteils und einer Ebene des zweiten Anschlussteils bildet. Wie zuvor erläutert, wird an dem zweiten Anschlussteil ein Flachstück angeordnet. Um die der Batterie zugewandte Fläche des Flachstücks im Wesentlichen in eine Ebene mit der der Batterie zugewandten Fläche des ersten Anschlussteils zu bringen, wird der Versatz vorgeschlagen.

Gemäß einem vorteilhaften Ausführungsbeispiel wird vorgeschlagen, dass der Versatz derart ist, dass die der Batterie zugewandte Fläche des ersten Anschlussteils koplanar zu der der Batterie zugewandten Fläche des Flachstücks ist. Diese Koplanarität ermöglicht es, die zu verbindenden Batteriepole mit einem Werkzeug besonders einfach stoffschlüssig mit dem Batteriezellenverbinder zu verbinden.

Die Verbindung zwischen dem Batteriezellenverbinder und dem jeweiligen Batteriepol kann beispielsweise mittels eines Laserschweißverfahrens erfolgen. Beim Laserschweißen ist es jedoch notwendig, dass bereits zu Beginn des Schweißvorgangs ein mechanischer Kontakt zwischen den zu fügenden Bauteilen besteht. Daher wird bevorzugt das erste Anschlussteil gegen einen Pol einer ersten Batterie gedrückt und das Flachstück gegen einen gegenpoligen Pol einer zweiten Batterie gedrückt. Die so mechanisch in Kontakt gebrachten Teile werden dann mittels eines Lasers verschweißt.

Bei Batteriemodulen, wie sie zuvor beschrieben wurden, ist die Temperatur der jeweiligen Batterien in einem bestimmten Temperaturfenster einzuhalten. Erhitzt sich eine Batterie zu sehr, besteht die Gefahr, dass diese Batterie zerstört wird oder schlimmstenfalls explodiert. Wenn dies geschieht, ist das ganze Batteriemodul zerstört. Daher sollte jede einzelne Batterie hinsichtlich ihrer Temperatur überwacht werden. Um dies zu ermöglichen, wird vorgeschlagen, dass das erste Anschlussteil einen aus einem dritten elektrisch leitenden Material gebildeten Verbindungsbereich auf der der Batterie abgewandten Seite aufweist. Der Verbindungsbereich kann auch an dem zweiten Anschlussteil oder dem Verbindungsteil angeordnet sein. Der Temperaturabgriff kann über Temperatursensoren erfolgen. Es ist möglich, denn Temperatursensor an dem Zellenverbinder, beispielsweise mittels SMD, zu montieren. Eine getrennte Überwachung jedes einzelnen Paars von Batterien ist möglich, und ein Ansteigen der Temperatur über einen Grenzwert ist detektierbar, woraufhin das Modul abgeschaltet werden kann.

An dem Verbindungsbereich kann ein Verbindungsdraht einer Leiterplatte verbunden werden, beispielsweise verlötet werden. Über diesen Verbindungsdraht ist ein Spannungsabgriff auf dem Batteriezellenverbinder möglich. Somit kann mit Hilfe des Verbindungsbereichs die Spannung des Batteriezellenverbinders und somit respektive die Spannung der einzelnen Batterien überwacht werden.

Gemäß einem vorteilhaften Ausführungsbeispiel wird auch vorgeschlagen, dass der Verbindungsbereich flächenbündig mit der der Batterie abgewandten Fläche des ersten oder zweiten Anschlussteils oder Verbindungsteils ist. Somit ist der Bauraum des Batteriezellenverbinders minimiert.

Gemäß einem vorteilhaften Ausführungsbeispiel kann der Verbindungsbereich mit dem dritten Metall beschichtet sein. Die Beschichtung mit dem dritten Metall kann vor, während oder nach dem Formen der Anschlussteile und des Verbindungsteils erfolgen.

Auch ist es möglich, dass der Verbindungsbereich mit dem dritten Metall walzplattiert ist. Hierbei kann der Verbindungsbereich bzw. das dritte Metall auf dem ersten Anschlussteil oder dem zweiten Anschlussteil oder dem Verbindungsteil walzplattiert werden.

Gemäß einem vorteilhaften Ausführungsbeispiel ist der Verbindungsbereich aus einem der Metalle Kupfer, Nickel, Zinn, Zink, Silber, Gold oder Legierungen davon gebildet. Auch ist eine Beschichtung des Verbindungsbereichs mit einem Metall oder einer Legierung möglich.

Gemäß einem vorteilhaften Ausführungsbeispiel wird auch vorgeschlagen, dass in zumindest einem Anschlussteil eine Öffnung für die Batterie angeordnet ist. Insbesondere Lithium-Ionen-Batterien, jedoch auch andere chemische Energiespeicher, müssen "atmen" können und verfügen daher über Berstmembranen.

Eine Öffnung ist an zumindest einem der Pole, bevorzugt jedoch an jedem der beiden Pole der Batterie, notwendig. Wenn nun, wie vorgeschlagen, das Flachstück und das erste Anschlussteil stoffschlüssig mit dem Pol verbunden sind, ist für eine Entgasungsmöglichkeit zu sorgen. Diese Entgasungsmöglichkeit wird durch die Öffnung oder Ausnehmungen in dem Anschlussteil und/oder dem Flachstück ermöglicht.

Die Öffnung ermöglicht auch das Verschweißen des Anschlussteils mit dem Batteriepol entlang ihres Umfangs einem Laser.

Gemäß einem vorteilhaften Ausführungsbeispiel ist die Öffnung rund. Die Ausnehmung ist für eine mögliche Entgasung der Zelle bevorzugt genauso groß und deckungsgleich mit der Berstmembran.

Auch wird vorgeschlagen, dass die Öffnung einen ihren Umfang durchbrechenden Vorsprung aufweist. Hierbei kann beispielsweise die Öffnung zunächst als Bohrung oder sonstige runde Öffnung geformt werden und daran anschließend eine hieraus herausragende Nase aus dem Anschlussteil bzw. dem Flachstück herausgenommen werden. Die Öffnung mit dem aus dem Umfang herausgenommenen Versatz bzw. Vorsprung kann auch beim Formen der Anschlussteile oder des Flachstücks, beispielsweise beim Stanzen, gebildet werden.

Um das Anschlussteil bzw. das Flachstück mit dem Batteriepol stoffschlüssig zu verbinden, wird vorgeschlagen, dass ein Durchmesser der Öffnung kleiner als ein Batteriepol ist. Somit ist es möglich, dass das Anschlussteil bzw. das Flachstück auf den Batteriepol gedrückt werden kann und ein mechanischer Kontakt zwischen Anschlussteil bzw. Flachstück und Batteriepol gewährleistet ist, ohne dass der Pol durch die Öffnung gedrückt wird. Durch die Öffnung hindurch kann dann beispielsweise mit einem Laser im Bereich der Umfangsfläche der Öffnung die stoffschlüssige Verbindung zwischen Batteriepol und Batteriezellenverbinder hergestellt werden.

Gemäß einem vorteilhaften Ausführungsbeispiel wird daher vorgeschlagen, dass eine Batterie bzw. ein Batteriepol zumindest teilweise entlang des Innenumfangs der Öffnung stoffschlüssig mit dem ersten Anschlussteil verbunden ist. Diese stoffschlüssige Verbindung kann beispielsweise mittels Laserschweißen erfolgen. Auch ist ein Reibschweißen oder ein Ultraschallschweißen möglich.

Wie bereits zuvor erläutert, kann das Flachstück als auch das Anschlussteil eine Öffnung aufweisen. Um die Entlüftung durch das Anschlussteil und das Flachstück zu gewährleisten, wird vorgeschlagen, dass das Flachstück eine Öffnung koaxial zu einer Öffnung in dem zweiten Anschlussteil aufweist. Somit durchgreift die Öffnung sowohl das Flachstück als auch das zweite Anschlussteil.

Gemäß einem vorteilhaften Ausführungsbeispiel wird auch vorgeschlagen, dass eine Batterie zumindest teilweise entlang des Umfangs der Öffnung stoffschlüssig mit dem Flachstück verbunden ist. Wie bereits zuvor für das Anschlussteil erläutert, kann die Batterie bzw. der Batteriepol mittels eines Schweißverfahrens stoffschlüssig mit dem Flachstück verbunden werden. Durch diese stoffschlüssige Verbindung ist der Übergangswiderstand zwischen Batteriezellenverbinder und den jeweiligen Batteriepolen gering, so dass eine Verlustleistung in dem Übergang gering ist und eine Wärmeentwicklung weitestgehend vermieden bzw. reduziert wird.

Gemäß einem vorteilhaften Ausführungsbeispiel wird auch vorgeschlagen, dass die Öffnung des zweiten Anschlussteils größer als die Entlüftungsöffnung des ersten Anschlussteils ist, und dass die Größe der Öffnung des Flachstücks der Größe der Entlüftungsöffnung des ersten Anschlussteils entspricht. Somit sind die Öffnung des Flachstücks und die Entlüftungsöffnung des ersten Anschlussteils einander entsprechend, insbesondere so groß, dass ihr Außendurchmesser geringer ist als die Größe eines Pols einer Batterie. In dem zweiten Anschlussteil kann eine größere Öffnung vorgesehen sein, die koaxial mit der Öffnung des Flachstücks ist.

Es ist erkannt worden, dass ein wellenförmiger Längsschnitt des Verbindungsteils dessen Flexibilität erhöht. Insbesondere ist von Vorteil, wenn die Flexibilität des Verbindungsteils im zumindest zwei Raumrichtungen erhöht wird. Durch die erhöhte Flexibilität können Zug- und Druckkräfte sowohl in horizontaler als auch vertikaler Richtung durch das Verbindüngsteil leicht aufgenommen werden, so dass diese Kräfte nicht in die Verbindungsstelle zwischen dem Batteriezellenverbinder und dem Batteriepol eingekoppelt würde. Der wellenförmige Längsschnitt führt außerdem dazu, dass Torsionskräfte durch das Verbindungsteil aufgenommen werden können. Die beiden Anschlussteile können somit horizontal als auch vertikal relativ gegeneinander bewegt als auch gegeneinander tordiert werden, wobei die Kräfte durch das Verbindungsteil aufgenommen werden. Das Verbindungsteil ist vorzugsweise so ausgestaltet, dass es im Vergleich zu einem flachen Verbindungsteil ein verringertes Flächtenträgheitsmoment in zumindest zwei Raumrichtungen aufweist. Das Verbindungsteil ist derart wellenförmig, dass seine Elastizität in zumindest zwei Raumrichtungen gegenüber einem flachen Verbindungsteil erhöht ist.

Der wellenförmige Längsschnitt ist dadurch gewährleistet, dass das Verbindungsteil zunächst winklig zu einem ersten Anschlussteil aus der Ausbreitungsebene des Anschlussteils heraus geführt ist. In einem Mittelteil des Verbindungsteils ist das Verbindungsteil dann so gekrümmt, dass der Mittelteil im Wesentlichen senkrecht, vorzugsweise jedoch zwischen 45 und 90° zur Ausbreitungsrichtung, verläuft. Dieser Mittelteil verbindet einen Wellenkamm mit einem Wellental des Verbindungsteils. Ausgehend von dem Wellental kann dann das Verbindungsteil wieder winklig zum zweiten Anschlussteil geführt sein.

Das Verbindungsteil bildet im Bereich seines wellenförmigen Längsschnitts einen Deformationsbereich aus, der vorzugsweise elastisch deformierbar ist. Dieser Deformationsbereich kann Zug- und Druckkräfte sowohl axial als auch radial zwischen den Anschlussteilen aufnehmen. Auch kann das Verbindungsteil Korrisionskräfte zwischen den Anschlussteilen aufnehmen.

Wellenförmig im Sinne des Gegenstandes bedeutet, dass das Verbindungsteil nach oben und nach unten aus der Ausbreitungsebene der Anschlussteile ausbricht.

Längsschnitt im Sinne des Gegenstandes kann bedeuten, dass dies der Schnitt durch die beiden Anschlussteile und das Verbindungsteil ist. Der Längsschnitt kann diejenige Ebene betreffen, welche parallel zur Ausbreitungsrichtung liegt und senkrecht zur breiten Oberfläche der Anschlussteile als auch des Verbindungsteils liegt.

Das Verbindungsteil weist im Längsschnitt zumindest einen Wellenkamm und ein Wellental auf. Der Wellenkamm ist in der Regel die maximale Auslenkung des Verbindungsteils aus der Ebene der Oberfläche der Anschlussteile nach oben heraus. Das Wellental ist in der Regel die maximale Auslenkung des Verbindungsteils aus der Ebene der Oberfläche der Anschlussteile nach unten heraus. Dadurch, dass ein Wellental und ein Wellenkamm den wellenförmigen Längsschnitt bilden, kann das Verbindungsteil Zug- und Druckkräfte sowohl horizontal als auch vertikal aufnehmen.

Das Verbindungsteil ist im Längsschnitt Z-förmig. Z-förmig im Sinne des Gegenstandes kann bedeuten, dass der Mittelsteg im Wesentlichen senkrecht oder maximal 10 bis 40° zur Senkrechten geneigt ist, und dass die oberen und unteren Balken des Z winklig zur Horizontalen geformt sind.

Gemäß einem vorteilhaften Ausführungsbeispiel wird auch vorgeschlagen, dass das Verbindungsteil im Längsschnitt in einem im Wesentlichen senkrecht zur Ausbreitungsrichtung verlaufenden Teil verjüngt ist. Insbesondere im Mittelteil des Verbindungsteils kann die Verjüngung vorgesehen sein. Die Verjüngung dient dazu, dass das Verbindungsteil eine erhöhte Flexibilität aufweist. Hierdurch kann die Fähigkeit zur Kraftaufnahme im Verbindungsteil erhöht werden.

Gemäß einem vorteilhaften Ausführungsbeispiel wird vorgeschlagen, dass das Verbindungsteil im Längsschnitt zumindest zwei Biegewinkel von größer 90° aufweist. Die Biegewinkel sind bevorzugt diejenigen Winkel, um die das Mittelteil des Verbindungsteils gegenüber den Außenteilen des Verbindungsteils verbogen ist. Die Außenteile des Verbindungsteils sind jeweils winklig zu der Oberfläche der Anschlussteile gebildet. Insbesondere sind sie winklig zur breiten Oberfläche der Anschlussteile gebildet. Um einen im Wesentlichen senkrechten Mittelteil ausbilden zu können, müssen die winklig angeordneten Verbindungsteile um jeweils mehr als 90° verbogen werden.

Ein Ausführungsbeispiel schlägt einen Batteriezellenverbinder vor, bei dem das erste und/oder das zweite Anschlussteil als Flachteil gebildet ist.

Ein Ausführungsbeispiel schlägt einen Batteriezellenverbinder vor, zumindest ein Anschlussteil aus
A) Aluminium,
B) Zinn,
C) Zink,
D) Kupfer,
E) Silber,
oder Legierungen davon gebildet oder damit beschichtet ist.

Ein Ausführungsbeispiel schlägt einen Batteriezellenverbinder vor, bei dem das Flachstück aus
A) Stahl,
B) Zinn,
C) Zink,
D) Kupfer,
E) Silber,
oder Legierungen davon gebildet oder damit beschichtet ist.

Ein Ausführungsbeispiel schlägt einen Batteriezellenverbinder vor, bei dem die Rippen mittels einer der Verfahren:
A) Stanzen,
B) Schneiden,
C) Laserschneiden,
D) Wasserstrahlschneiden
aus dem Verbindungsteil geformt sind.

Ein Ausführungsbeispiel schlägt einen Batteriezellenverbinder vor, bei dem in zumindest einem Anschlussteil eine Öffnung zum Laserschweißen des Anschlussteils and den Batteriepol angeordnet ist.

Ein weiterer Gegenstand ist ein Verfahren nach Anspruch 16.

Ein weiterer Gegenstand ist ein System nach Anspruch 17.

Gemäß einem vorteilhaften Ausführungsbeispiel wird vorgeschlagen, dass die zumindest zwei Batterien durch den Batteriezellenverbinder elektrisch in Reihe geschaltet sind. Hierdurch kann die Ausgangsspannung eines Moduls entsprechend der Anzahl der in Reihe geschalteten Batterien erhöht werden.

Gemäß einem vorteilhaften Ausführungsbeispiel wird auch vorgeschlagen, dass in zwei Spalten jeweils zumindest zwei Batterien vertikal übereinander angeordnet und durch einen Batteriezellenverbinder verbunden sind, und dass die jeweils letzten Batterien einer jeweiligen Spalte durch einen Batteriezellenverbinder verbunden sind.

Auch wird vorgeschlagen, den Batteriezellenverbinder in einer Startbatterie eines Verbrennungsmotors einzusetzen.

Nachfolgend wird der Gegenstand anhand einer Ausführungsbeispiele zeigenden Zeichnung näher erläutert. In der Zeichnung zeigen:
Fig. 1a eine Schnittansicht eines nicht beanspruchten ersten Batteriezellenverbinders;
Fig. 1b eine Schnittansicht eines erfindungsgemäßen zweiten Batteriezellenverbinders;
Fig. 2a eine Ansicht eines nicht beanspruchten
Batteriezellenverbinders;
Fig. 2b eine Ansicht eines Batteriezellenverbinders;
Fig. 2c eine weitere Ansicht des Batteriezellenverbinders;
Fig. 3a eine Schnittansicht eines nicht beanspruchten Batteriezellenverbinders;
Fig. 3b eine Schnittansicht eines nicht beanspruchten Batteriezellenverbinders;
Fig. 4a eine Schnittansicht eines nicht beanspruchten Batteriezellenverbinders;
Fig. 4b eine Schnittansicht eines nicht beanspruchten Batteriezellenverbinders;
Fig. 5 eine Seitenansicht einer Spalte mit fünf Batterien eines Batteriemoduls;
Fig. 6 eine Draufsicht auf ein Batteriemodul mit fünf in einer Spalte verschalteten Batterien und zwei Spalten.

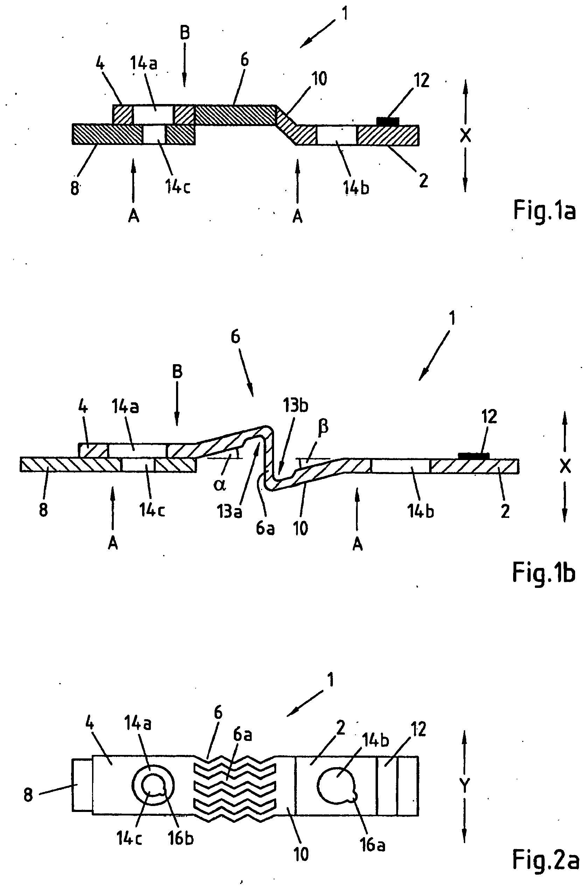

Fig. 1a,b zeigt eine Ansicht eines Batteriezellenverbinders 1 im Längsschnitt. Die Schnittansicht zeigt, dass der Batteriezellenverbinder 1 aus einem ersten Anschlussteil 2, einem zweiten Anschlussteil 4, einem Verbindungsteil 6 und einem an dem zweiten Anschlussteil 4 angeordneten Flachstück 8 gebildet ist.

In der Fig. 1a ist zu erkennen, dass das Verbindungsteil 6 in einer Ebene mit dem zweiten Anschlussteil 4 angeordnet ist. Das Verbindungsteil 6 kann einstückig mit dem zweiten Anschlussteil 4 und dem ersten Anschlussteil 2 geformt sein. Auch kann das Verbindungsteil 6 ein eigenes Bauteil sein und stoffschlüssig mit dem ersten Anschlussteil 2 und dem zweiten Anschlussteil 4 verbunden sein.

In der Fig. 1b ist zu erkennen, dass das Verbindungsteil 6 Z-förmig zwischen dem ersten Anschlussteil und dem zweiten Anschlussteil 4 angeordnet ist. Das Verbindungsteil 6 kann einstückig mit dem zweiten Anschlussteil 4 und/oder dem ersten Anschlussteil 2 geformt sein. Auch kann das Verbindungsteil 6 ein eigenes Bauteil sein und stoffschlüssig mit dem ersten Anschlussteil 2 und dem zweiten Anschlussteil 4 verbunden sein.

In dem ersten Anschlussteil 2 ist ein Versatz 10 angeordnet. Der Versatz 10 könnte jedoch auch im Verbindungsteil 6 als auch im zweiten Anschlussteil 4 angeordnet sein. Durch den Versatz 10 ist die einer Batterie zugewandte Seite A des ersten Anschlussteils 2 im Wesentlichen koplanar zu der der Batterie zugewandten Seite A eines Flachstücks 8.

Das Flachstück 8 ist auf der der Batterie zugewandten Seite A des zweiten Anschlussteils 4 mit dem zweiten Anschlussteil 4 stoffschlüssig verbunden.

Das erste Anschlussteil 2 und das Flachstück 8 sind bevorzugt aus unterschiedlichen elektrisch leitenden Materialien, insbesondere Metallen, geformt bzw. mit solchen Materialien oder Metallen beschichtet. Beispielsweise kann das erste Anschlussteil 2 aus Aluminium geformt sein und das Flachstück 8 aus Stahl. Es ist auch möglich, dass das erste Anschlussteil 2 mit einem anderen Metall als Aluminium, beispielsweise Zinn, Zink, Kupfer, Nickel, Eisen, Stahl, Silber, Gold oder dgl. beschichtet ist oder aus einem Vollmaterial geformt ist. Legierungen von den genannten Metallen sind ebenfalls möglich.

Das Flachstück 8 kann ebenfalls aus Stahl, Zinn, Zink, Kupfer, Aluminium, Nickel, Eisen, Silber, Gold oder dgl. oder Legierungen davon geformt sein oder mit diesen Metallen beschichtet sein.

Auch ist in der Fig. 1b zu erkennen, dass das Verbindungsteil 6 Z-förmig geformt ist, wobei zwei Außenteile des Verbindungsteils 6 winklig in den Winkeln *α* und *β* zu den Anschlussteilen 2 und 4 angeordnet sind. In einem Mittelbereich 6a des Verbindungsteils 6 ist das Verbindungsteil verjüngt. Ferner sind die Biegewinkel 13a und 13b vorgesehen. Entlang dieser Biegewinkel 13 ist das Verbindungsteil 6 um mehr als 90° gebogen, so dass ein im Wesentlichen senkrecht verlaufender Mittelteilbereich 6a des Verbindungsteils 6 vorhanden ist.

Die Winkel α und β sind erfindungsgemäß zwischen 1 und 10°. Die Winkel α und β können identisch sein. Auch ist es möglich, dass der Winkel a größer ist als der Winkel β, in diesem Fall wird der Versatz 10 in dem Verbindungsteil 6 gebildet, da das zum Anschlussteil 2 weisende Endstück des Verbindungsteils 6 weniger stark geneigt ist; als das zum Anschlussteil 4 weisende Endstück des Verbindungsteils 6.

Ferner ist zu erkennen, dass die Wellenform im Längsschnitt einen Wellenkamm und einen Wellental aufweist. Auch ist zu erkennen, dass der Wellenkamm außerhalb der Oberflächenebene der breiten Oberfläche des Anschlussteils 4 liegt. Das Wellental liegt, wie in der Fig. 1b zu erkennen ist, außerhalb der unteren Oberflächenebene der breiten Oberfläche des Anschlussteils 2.

In der Fig. 1a,b ist zu erkennen, dass das erste Anschlussteil 2 eine Öffnung, beispielsweise eine Schweißöffnung, Positionieröffnung oder eine Entlüftungsöffnung 14b aufweist. Das zweite Anschlussteil 4 weist eine Schweißöffnung oder Entlüftungsöffnung 14a auf, und das Flachstück 8 weist eine Schweißöffnung oder Entlüftungsöffnung 14c auf. Die Schweißöffnung dient dazu, dass in einem Laserschweißverfahren der Laser durch die Öffnung auf das Flachstück und/oder die Batteriepole gerichtet werden kann, so dass die Anschlussteile mittels des Laserstrahls mit den Batteriepolen verschweißt werden können.

Die Positionieröffnung 14c ist koaxial zur Schweißöffnung 14a. Die Positionieröffnung 14c kann beispielsweise einen gleichen Durchmesser wie die Positionieröffnung 14b haben. Die Positionieröffnung 14a kann beispielsweise einen größeren Durchmesser als die Positionieröffnung 14c haben.

Zur Montage des Batteriezellenverbinders 1 an einer Batterie 20 wird an der der Batterie 20 abgewandten Seite B der Batteriezellenverbinder 1 gegen zwei hier nicht dargestellte Pole 22, 24, welche zueinander gegenpolig sind, von zwei verschiedenen Batterien 20 gedrückt. Hierbei kommt das erste Anschlussteil 2 in Kontakt mit einem ersten Pol 22 einer ersten Batterie 20 und das Flachstück 8 mit einem zum ersten Pol gegenpoligen zweiten Pol 24 einer zweiten Batterie 20. Sobald ein Kontakt hergestellt wurde, kann beispielsweise mittels eines Lasers durch die Schweißöffnung 14b das erste Anschlussteil 2 stoffschlüssig mit dem ersten Batteriepol 22 verbunden werden. Hierbei wird entlang der Umfangsfläche der Positionieröffnung 14b der Laserstrahl geführt, so dass eine stoffschlüssige Verbindung entsteht. Durch die Schweißöffnung 14a und die Positionieröffnung 14c kann das Flachstück 8 mittels eines Lasers stoffschlüssig mit dem zweiten Pol 24 der zweiten Batterie 20 verbunden werden. Sobald die Schweißnaht ausgekühlt bzw. hart ist, kann der Druck aufgehoben werden, und der Batteriezellenverbinder 1 ist stoffschlüssig mit den jeweiligen Polen 22, 24 der beiden Batterien 20 verbunden.

Um die Temperatur und/oder Spannung des Batteriezellenverbinders 1 und respektive der jeweiligen Batterien 20 /Zellen in den Anschlussteilen 2, 4 überwachen/sensieren zu können, ist ein Verbindungsbereich 12 auf der der Batterie 20 abgewandten Seite B des ersten Anschlussteils 2 angeordnet. Der Verbindungsbereich 12 kann jedoch auch an dem Verbindungsteil 6 als auch dem zweiten Anschlussteil 4 angeordnet sein. Der Verbindungsbereich 12 kann aus Kupfer, Silber, Gold, Zinn, Zink, Legierungen davon oder anderen Metallen gebildet sein. Auch kann der Verbindungsbereich 12 auf der Oberfläche des ersten Anschlussteils 2, dem Verbindungsteil 6 oder dem zweiten Anschlussteil 4 beschichtet sein oder mit dem ersten Anschlussteil 2 , dem Verbindungsteil 6 oder dem zweiten Anschlussteil 4 walzplattiert sein. Über den Verbindungsbereich 12 kann ein Abgriff zu einem integrierten Schaltkreis oder einer Platine 40 führen, an dem die Zelle/Batterie hinsichtlich ihrer Spannung, Stromstärke und/oder ihrer Temperatur überwachbar und/oder beinflussbar ist.

Der Verbindungsteil 6 ermöglicht es, die der Batterie 20 zugewandten Seiten A des ersten Anschlussteils 2 und des Flachstücks 8 relativ zueinander in Richtung X zu verschieben. Hierdurch kann beim stoffschlüssigen Verbinden des Batteriezellenverbinders 1 mit den hier nicht dargestellten Batterien 20 ein Toleranzausgleich in einem Toleranzbereich 26 erfolgen. Somit ist es möglich, dass Toleranzen in der Lage der Batteriepole 22, 24 ausgeglichen werden und trotzdem eine stoffschlüssige Verbindung zwischen erstem Anschlussteil 2 und Batteriepol 22, 24 bzw. Flachstück 8 und Batteriepol 22, 24 mittels eines Schweißverfahrens möglich ist.

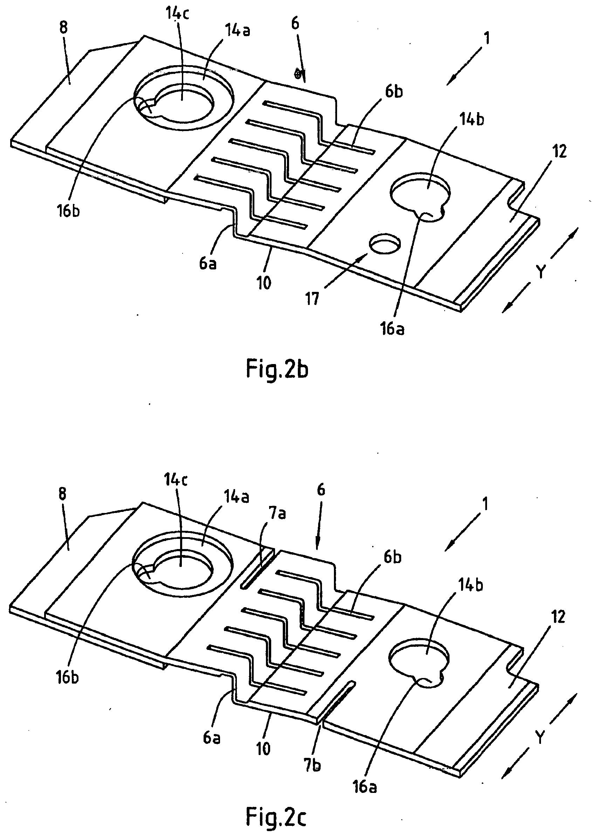

Fig. 2a zeigt eine Draufsicht eines Batteriezellenverbinders 1. Gleiche Bezugszeichen zeigen in den Figuren jeweils gleichartige Elemente. In der Fig. 2 ist zu erkennen, dass der Verbindungsteil 6 aus einander beabstandeten Rippen 6a geformt ist. Wie zu erkennen ist, sind die Rippen wellenförmig. In der Fig. 2 verlaufen die Rippen in der Ebene des zweiten Anschlussteils 4. Es ist jedoch auch möglich, dass die Rippen aus der Ebene des zweiten Anschlussteils 4 herausragen. Mittels der Rippen 6a ist es möglich, dass das erste Anschlussteil 2 relativ gegenüber dem Flachstück 8 bzw. dem zweiten Anschlussteil 4 in Richtung Y verschiebbar ist, um ebenfalls einen Toleranzausgleich zu erzielen. In der Fig. 2a ist zu erkennen, dass das erste Anschlussteil 2 die Entlüftungsöffnung 14b aufweist. In der Entlüftungsöffnung 14b ist der aus dem Umfang der Entlüftungsöffnung 14b hervorstehende Vorsprung 16a dargestellt.

Fig. 2b zeigt eine Ansicht eines Batteriezellenvorbinders 1. Gleiche Bezugszeichen zeigen in den Figuren jeweils gleichartige Elemente. In der Fig. 2b ist zu erkennen, dass in dem Verbindungsteil 6 Nuten/Durchbrüche 6b geformt/eingebracht sind. Wie zu erkennen ist, verlaufen die Nuten in Ausbreitungsrichtung des Verbindungsteils 6. Mittels der Nut/Verjüngung 6a wird die Flexibilität des Verbindungsteils in Y-Richtung erhöht, um einen Toleranzausgleich zu ermöglichen. Die Nuten 6b können das Verbindungsteil 6 durchbrechen.

Eine entsprechende, vorzugsweise gleich große Positionieröffnung 14c mit einem Versatz 16b ist in dem Flachstück 8 geformt, wie ebenfalls in der Fig. 2 zu erkennen ist. Koaxial zu der Positionieröffnung 14c ist eine Schweißöffnung 14a in dem ersten Anschlussteil 4 gebildet, dessen Durchmesser größer als der Durchmesser der Positionieröffnung 14c ist.

Fig. 2c zeigt eine weitere Ansicht eines Batteriezellenverbinders 1. Entsprechend der Fig. 2a ist auch dieser Batteriezellenverbinder mit Nuten 6b versehen. Die Nuten 6b sind vorzugsweise durch das gesamte Material hindurchgehend.

Auch zu erkennen ist, dass im Bereich des Mittelteils 6a das Verbindungsteil 6 verjüngt ist. Das heißt, dass dessen Querschnitt geringer ist, als der Querschnitt des Verbindungsteils an den nach außen weisenden Bereichen.

In der Fig. 2c ist ferner zu erkennen, dass die Anschlussteile 2, 4 mit nach innen weisenden, schlitzartigen Ausnehmungen 7a, 7b versehen sind. Die Ausnehmungen 7a, 7b sind in der dargestellten Form in den Anschlussteilen 2, 4 angeordnet, können jedoch auch ohne Weiteres in dem Verbindungsteil 6 angeordnet sein. Die Ausnehmungen 7 sind vorzugsweise kürzer als die halbe Breite des Batteriezellenverbinders. Auch sind die Ausnehmungen 7a, 7b vorzugsweise aufeinander gegenüberliegenden Seiten jeweils an einem Anschlussteil 2, 4 angeordnet. Die Ausnehmungen 7a, 7b dienen dazu, die Flexibilität des Batteriezellenverbinders 1 quer zur Ausbreitungsrichtung zu erhöhen. Die Ausnehmung 7 verlaufen vorzugsweise senkrecht zur Außenkante des Zellenverbinders 1.

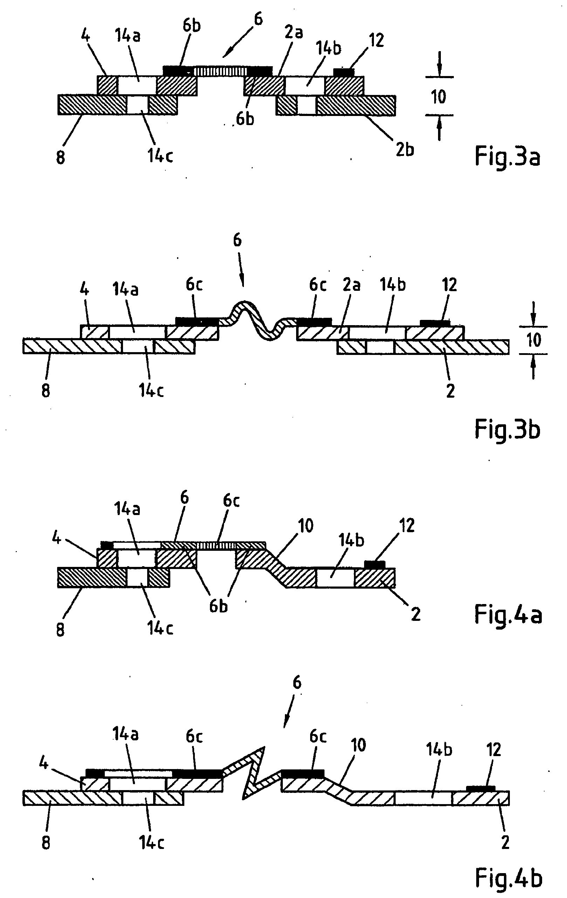

In der Fig. 3 ist zu erkennen, dass der Versatz 10 durch ein zweistückig geformtes erstes Anschlussteil 2 mit den Teilen 2a und 2b geformt ist. Diese Teile können stoffschlüssig miteinander verbunden sein und aus demselben Metall geformt sein oder aus unterschiedlichen Metallen. Ferner ist in der Fig. 2 zu erkennen, dass der Verbindungsteil 6 aus einem Geflecht geformt ist. Dies kann ein Aluminium- oder Kupfergeflecht sein. Geflechte aus anderen Metallen sind ebenfalls möglich. Zu erkennen ist auch, dass das Verbindungsteil 6 zwei kompaktierte Bereiche 6b aufweist, welche jeweils im Bereich des ersten Anschlussteils 2 und des zweiten Anschlussteils 4 vorgesehen sind. An den kompaktierten Bereichen 6b kann das Verbindungsteil 6 stoffschlüssig jeweils mit dem ersten Anschlussteil 2 und dem zweiten Anschlussteil 4 verbunden werden. Hierzu kann beispielsweise ein Reibschweißen, ein Widerstandsschweißen, ein Ultraschallschweißen, oder ein sonstiges Schweißverfahren, oder ein sonstiges Verbindungsverfahren zum Einsatz kommen.

In der Fig. 3 ist zu erkennen, dass der Versatz 10 durch ein zweistückig geformtes erstes Anschlussteil 2 mit den Teilen 2a und 2b geformt ist. Diese Teile können stoffschlüssig miteinander verbunden sein und aus demselben Metall geformt sein oder aus unterschiedlichen Metallen. Ferner ist in der Fig. 2 zu erkennen, dass der Verbindungsteil 6 aus einem Geflecht wellenförmig geformt ist. Die Wellen sind hierbei nicht Z-förmig, sondern S-förmig. Andere Wellenformen sind bei allen Beispielen möglich. Dies kann ein Aluminium- oder Kupfergeflecht sein. Geflechte aus anderen Metallen sind ebenfalls möglich. Zu erkennen ist auch, dass das Verbindungsteil 6 zwei kompaktierte Bereiche 6c aufweist, welche jeweils im Bereich des ersten Anschlussteils 2 und des zweiten Anschlussteils 4 vorgesehen sind. An den kompaktierten Bereichen 6c kann das Verbindungsteil 6 stoffschlüssig jeweils mit dem ersten Anschlussteil 2 und dem zweiten Anschlussteil 4 verbunden werden. Hierzu kann beispielsweise ein Reibschweißen, ein Widerstandsschweißen, ein Ultraschallschweißen, oder ein sonstiges Schweißverfahren, oder ein sonstiges Verbindungsverfahren 2um Einsatz kommen.

Bei dem in Fig. 4a gezeigten Batteriezellenverbinder ist das Verbindungsteil 6 aus Folien 6c geformt, welche ebenfalls kompaktierte Bereiche 6b aufweisen. Der kompaktierte Bereich 6b im Bereich des zweiten Verbindungsteils 4 ragt über die Entlüftungsöffnung 14a hinaus. Im Bereich der Entlüftungsöffnung 14a und im Bereich des Endes des Abstands zwischen erstem Anschlussteil 2 und zweitem Anschlussteil 4 kann das Verbindungsteil 6 mit dem zweiten Anschlussteil 4 stoffschlüssig verbunden sein. Das Verbindungsteil 6 kann ebenfalls mit dem ersten Anschlussteil 2 stoffschlüssig verbunden sein. Dadurch, dass der kompaktierte Bereich 6b des Verbindungsteils 6 im Wesentlichen über einen Großteil der Fläche des zweiten Anschlussteils 4 ragt, ergibt sich eine große Kontaktfläche und somit ein geringer Übergangswiderstand. Der zweite kompaktierte Bereich 6b kann auch entlang des Versatzes 10 bis zum Verbindungsbereich 12 sich über den ersten Anschlussteil 2 erstrecken und ebenfalls eine Öffnung im Bereich der Entlüftungsöffnung 14b aufweisen.

Bei dem in Fig. 4b gezeigten Batteriezellenverbinder ist das Verbindungsteil 6 aus wellenförmigen Folien geformt, welche ebenfalls kompaktierte Bereiche 6c aufweisen. Der kompaktierte Bereich 6c im Bereich des zweiten Verbindungsteils 4 ragt über die Entlüftungsöffnung 14a hinaus.

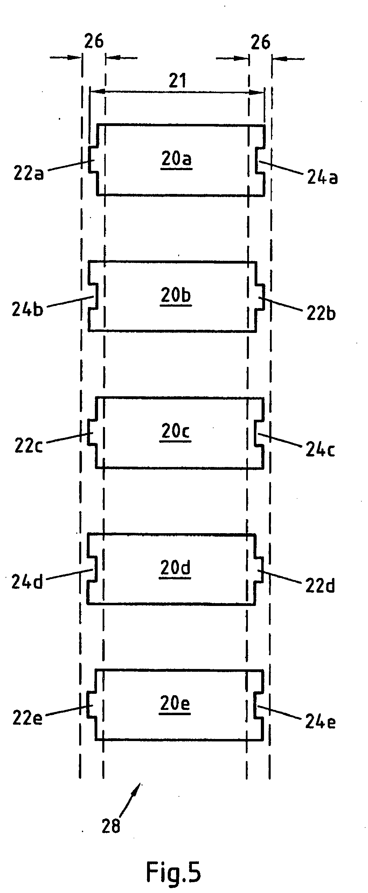

Fig. 5 zeigt eine schematische Seitenansicht einer ersten Spalte 28 aus fünf Batterien 20 a-e mit jeweils einem ersten Pol 22 a-e und jeweils einem zweiten Pol 24 a-e. Zu erkennen ist, dass die Batterien 20a-e in Spalte 28 übereinander angeordnet sind. Ferner ist zu erkennen, dass die Pole 22, 24 alternierend angeordnet sind. Das heißt, dass beispielsweise ein Pluspol 22a der Batterie 20a in einer Ebene mit einem Minuspol 24b einer Batterie 20b angeordnet ist. Darauf folgt wieder ein Pluspol 22c, auf den ein Minuspol 24d und erneut ein Pluspol 22e folgt.

Ferner ist zu erkennen, dass die Pole 22, 24 der Batterien 20 in einem Toleranzbereich 26, der vorliegend vergrößert dargestellt ist, angeordnet sind. Der Toleranzbereich 26 gibt an, innerhalb welchen Bereiches die Pole angeordnet sein können. Die Läge 21 der jeweiligen Batterien, d.h. der Abstand der Pole 22, 24 zueinander, ist toleranzbehaftet. Daraus folgt, dass die Pole 22, 24 nicht stets koplanar sind, so dass bei einem Verbinden mit einem Batteriezellenverbinder 1 diese Toleranz ausgeglichen werden muss.

Der Übersichtlichkeit halber ist in der Fig. 5 die Spalte 28 ohne die Batteriezellenverbinder dargestellt. Ein erster Batteriezellenverbinder 1a wäre beispielsweise zwischen dem Pluspol 22a und dem Minuspol 24b angeordnet. Danach wäre der Pluspol 22b mit einem Batteriezellenverbinder 1 mit einem Minuspol 24c verbunden. Der Pluspol 22c wäre über einen Batteriezellenverbinder mit dem Minuspol 24d verbunden. Der Pluspol 22d wäre über einen Batteriezellenverbinder 1 mit dem Minuspol 24e verbunden. Der Pluspol 22e wäre mit einem Batteriezellenverbinder mit einem Minuspol einer Batterie einer weiteren Spalte 28 verbunden. Die Batteriezellenverbinder 1 entlang einer Spalte 28 wären vertikal angeordnet, und ein Batteriezellenverbinder 1 der zwei Spalten 28 miteinander verbindet, wäre horizontal angeordnet.

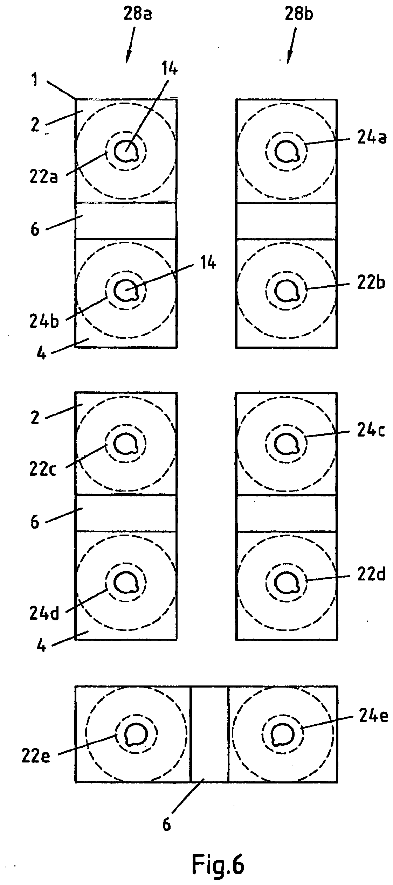

Eine solche Anordnung ist beispielsweise in der Fig. 6 zu erkennen. Fig. 6 zeigt zwei Spalten 28a, 28b nebeneinander. Hier ist zu erkennen, dass die Batteriezellenverbinder 1 jeweils Pluspol 22a mit Minuspol 24b, Pluspol 22c mit Minuspol 24d verbinden. Die Spalte 28a ist über den Pluspol 22e und einem Batteriezellenverbinder 1 mit dem Minuspol 24e der Spalte 28b verbunden.

Durch den gegenständlichen Batteriezellenverbinder 1 wird eine sortenreine Verbindung zwischen Batteriezellenverbinder 1 und einem jeweiligen Batteriepol 22, 24 gewährleistet. Hierdurch wird ein geringer Übergangswiderstand ermöglicht. Ein Toleranzausgleich ist mit dem gegenständlichen Batteriezellenverbinder ebenfalls möglich, , da vorzugsweise diese Scher-/Zug-/Druck- und Torsionskräfte durch das wellenförmige Verbindungsteil aufnehmen kann.. Der gegenständliche Batteriezellenverbinder 1 ist kostengünstig herstellbar und ermöglicht eine stoffschlüssige Verbindung mit Batteriepolen 22, 24 unterschiedlicher Polarität.

## Patentansprüche

1. Batteriezellenverbinder mit
- einem ersten zum Anschluss an einen Batteriepol einer ersten Batterie gebildeten Anschlussteil (2),
- einem zweiten Anschlussteil (4),
- einem zwischen den Anschlussteilen (2, 4) angeordneten, die Anschlussteile (2, 4) elektrisch miteinander kontaktierenden Verbindungsteil (6),
**dadurch gekennzeichnet,**
- **dass** das Verbindungsteil (6) einen Z-förmigen Längsschnitt zwischen den Anschlussteilen (2, 4) derart aufweist, dass das Verbindungsteil in zumindest zwei Raumrichtungen elastisch ist,
- wobei das Verbindungsteil (6) zwei Außenteile aufweist, die jeweils winklig zu einer breiten Oberfläche der Anschlussteile (2, 4) angeordnet sind, wobei
- ein erstes Außenteil in einem Winkel β zu der breiten Oberfläche des ersten Anschlussteils (2) angeordnet ist und ein zweites Außenteil in einem Winkel α zu der breiten Oberfläche des zweiten Anschlussteils (4) angeordnet ist und
- wobei die Winkel α und β zwischen 1° und 10° sind,
- wobei das Verbindungsteil (6) im Längsschnitt zumindest einen Wellenkamm und ein Wellental aufweist, und
- wobei der Wellenkamm und das Wellental jeweils außerhalb der Ebene zumindest eines der Anschlussteile liegen.

2. Batteriezellenverbinder nach Anspruch 1, **dadurch gekennzeichnet, dass** das erste Anschlussteil (2) zumindest an der einem Batteriepol zugewandten Seite (A) aus einem ersten elektrisch leitenden Material gebildet ist, und wobei an dem zweiten Anschlussteil (4) ein zum Anschluss an einen zweiten Batteriepol gebildetes, zumindest an der dem zweiten Batteriepol zugewandten Seite (A) aus einem zweiten von dem ersten elektrisch leitenden Material verschiedenen elektrisch leitenden Material gebildetes Flachstück (8) stoffschlüssig angeordnet ist

3. Batteriezellenverbinder nach Anspruch 2, **dadurch gekennzeichnet, dass** die der Batterie zugewandten Flächen des Flachstücks (8) und des erstes Anschlussteils (2) koplanar sind.

4. Batteriezellenverbinder nach Anspruch 1, **dadurch gekennzeichnet, dass** das Verbindungsteil (6) einstückig mit dem ersten und/oder dem zweiten Anschlussteil (2, 4) gebildet ist.

5. Batteriezellenverbinder nach Anspruch 1, **dadurch gekennzeichnet, dass** zumindest ein Anschlussteil (2, 4) aus
A) Aluminium,
B) Zinn,
C) Zink,
D) Kupfer,
E) Silber,
oder Legierungen davon gebildet oder damit beschichtet ist.

6. Batteriezellenverbinder nach Anspruch 2, **dadurch gekennzeichnet, dass** das Flachstück (8) aus
A) Stahl,
B) Zinn,
C) Zink,
D) Kupfer,
E) Silber,
oder Legierungen davon gebildet oder damit beschichtet ist.

7. Batteriezellenverbinder nach Anspruch 1, **dadurch gekennzeichnet, dass** das Verbindungsteil (6) aus zumindest zwei Folien (6b) oder aus einem von
A) Aluminiumlitzen,
B) Kupferlitzen,
C) Aluminiumgeflecht,
D) Kupfergeflecht,
gebildet ist.

8. Batteriezellenverbinder nach Anspruch 1, **dadurch gekennzeichnet, dass** das Verbindungsteil (6), das erste Anschlussteil (2) und/oder das zweite Anschlussteil (4) einen Versatz (10) zwischen einer Ebene des ersten Anschlussteils (2) und einer Ebene des zweiten Anschlussteils (4) bildet.

9. Batteriezellenverbinder nach Anspruch 1, **dadurch gekennzeichnet, dass** das erste Anschlussteil (2) einen aus einem dritten elektrisch leitenden Material gebildeten Verbindungsbereich (12) auf der der Batterie abgewandten Seite (B) aufweist, und/oder und/oder dass der Verbindungsbereich (12) flächenbündig mit der der Batterie abgewandten Fläche des ersten Anschlussteils (2) ist, und/oder dass der Verbindungsbereich (12) mit dem dritten Metall beschichtet ist, und/oder dass der Verbindungsbereich (12) mit dem dritten Metall walzplattiert ist.

10. Batteriezellenverbinder nach Anspruch 1, **dadurch gekennzeichnet, dass** in zumindest einem Anschlussteil (2, 4) eine Öffnung (14) für die Batterie angeordnet ist.

11. Batteriezellenverbinder nach Anspruch 2, **dadurch gekennzeichnet, dass** das Flachstück (8) eine Positionieröffnung (14c) koaxial zu einer Schweißöffnung (14a) in dem zweiten Anschlussteil (4) aufweist, und/oder dass eine Batterie zumindest teilweise entlang des Außenumfangs der Öffnung (14c) stoffschlüssig mit dem Flachstück (8) verbunden ist, und/oder dass die Schweißöffnung (14a) des zweiten Anschlussteils (4) größer als die Positionieröffnung (14b) des ersten Anschlussteils (2) ist und dass die Größe der Positionieröffnung (14c) des Flachstücks (8) der Größe der Positionieröffnung (14b) des ersten Anschlussteils (2) entspricht.

12. Batteriezellenverbinder nach Anspruch 1, **dadurch gekennzeichnet, dass** zumindest ein Anschlussteil weichgeglüht ist und/oder dass das Verbindungsteil (6) ganz oder teilweise weichgeglüht ist.

13. Batteriezellenverbinder nach Anspruch 1, **dadurch gekennzeichnet, dass** das Verbindungsteil (6) im Längsschnitt in einem im Wesentlichen senkrecht zur Ausbreitungsrichtung verlaufenden Teil verjüngt ist.

14. Batteriezellenverbinder nach Anspruch 1, **dadurch gekennzeichnet, dass** das Verbindungsteil (6) im Längsschnitt zumindest zwei Biegeradien von größer 90° aufweist.

15. Batteriezellenverbinder nach Anspruch 1, **dadurch gekennzeichnet, dass** das Verbindungsteil (6) voneinander beabstandete Rippen (6a) aufweist und/oder dass die Rippen (6a) koplanar zumindest zu der der Batterie abgewandten Seite (B) des ersten Anschlussteils (2) und/oder des zweiten Anschlussteils (4) sind und/oder dass die Rippen (6a) aus der Ebene zumindest eines Anschlussteils (2, 4) herausragend geformt sind und/oder dass die Rippen (6a) mittels einer der Verfahren:
A) Stanzen,
B) Schneiden,
C) Laserschneiden,
D) Wasserstrahlschneiden
aus dem Verbindungsteil (6) geformt sind.

16. Verfahren zur Herstellung eines Batteriezellenverbinders nach Anspruch 1
- Formen eines ersten Anschlussteils (2) aus einem elektrisch leitendem Material,
- Formen eines zweiten Anschlussteils (4),
- Z-förmiges Formen im Längsschnitt eines die Anschlussteile verbindenden Verbindungsteils (6) derart, dass das Verbindungsteil in zumindest zwei Raumrichtungen elastisch ist, wobei das Verbindungsteil (6) im Längsschnitt zumindest einen Wellenkamm und ein Wellental aufweist, und wobei der Wellenkamm und das Wellental jeweils außerhalb der Ebene zumindest eines der Anschlussteile liegen,
- stoffschlüssiges Verbinden eines aus einem elektrisch leitenden Material gebildeten Flachstücks (6) an einer einem Batteriepol zugewandten Seite (A) des zweiten Anschlussteils (4).

17. System aus
- zumindest zwei nebeneinander gegenpolig angeordneten Batterien (20), wobei gegenpolige Batteriepole (22, 24) jeweils zweier Batterien (20) toleranzbehaftet in einem Anschlussbereich (26) angeordnet sind und wobei die Batteriepole (22) einer ersten Polarität aus einem ersten elektrisch leitendem Material gebildet sind und Batteriepole (24) einer zweiten Polarität aus einem zweiten elektrisch leitendem Material gebildet sind, und
- zumindest einem Batteriezellenverbinder nach Anspruch 2, der mit einem ersten Anschlussteil (2) stoffschlüssig mit einem ersten Batteriepol (22) einer ersten Polarität einer ersten Batterie (20) verbunden ist und mit dem Flachstück (6) stoffschlüssig mit einem zum ersten Batteriepol (22) zugeordneten zweiten Batteriepol (24) einer zweiten Polarität einer zweiten Batterie (20) verbunden ist.

## Claims

1. Battery cell connector, with
- a first terminal part (2) adapted for connecting to a battery terminal of a first battery,
- a second terminal part (4),
- a connecting part (6) which is arranged between the two terminal parts (2, 4) and which electrically connects the terminal parts (2, 4) to one another,
**characterized in that**
- the connecting part (6) comprises a Z-shaped longitudinal cross-section such that the connecting part is elastically deformable in at least two spatial directions,
- wherein the connection part (6) has two outer parts which respectively are arranged in an angle relative to a broad surface of the terminal parts (2,4),
- wherein a first outer part is arranged at an angle of β relative to the broad surface of the first terminal part (2), and a second outer part is arranged at an angle of α relative to the broad surface of the second terminal part (4) and wherein α and β are angles between 0° and 10°,
- wherein the connecting part (6) comprises at least one corrugation ridge and one corrugation trough in longitudinal cross-section, and
- wherein the corrugation ridge and the corrugation trough respectively lie outside the plane of at least one of the terminal parts.

2. Battery cell connector according to Claim 1, **characterised in that** the first terminal part (2) is formed at least on the side (A) facing a battery terminal from a first electrically conductive material, and wherein a flat piece (8), which is formed for connecting to a second battery terminal and which is formed at least on the side (A) facing the second battery terminal from a second electrically conductive material different from the first electrically conductive material, is arranged materially bonded on the second terminal part (4).

3. Battery cell connector according to Claim 2, **characterised in that** the surfaces of the flat piece (8) and of the first terminal part (2) facing towards the battery are coplanar.

4. Battery cell connector according to Claim 1, **characterised in that** the connecting part (6) is formed integrally with the first and/or second terminal part (2, 4) .

5. Battery cell connector according to Claim 1, **characterised in that** at least one terminal part (2, 4) is formed from or coated with
A) aluminium,
B) tin,
C) zinc,
D) copper,
E) silver
or alloys thereof.

6. Battery cell connector according to Claim 2, **characterised in that** the flat piece (8) is formed from or coated with
A) steel,
B) tin,
C) zinc,
D) copper,
E) silver
or alloys thereof.

7. Battery cell connector according to Claim 1, **characterised in that** the connecting part (6) is formed from at least two foils (6b) or is formed from one of
A) stranded aluminium,
B) stranded copper,
C) braided aluminium,
D) braided copper.

8. Battery cell connector according to Claim 1, **characterised in that** the connecting part (6), the first terminal part (2) and/or the second terminal part (4) form an offset (10) between a plane of the first terminal part (2) and a plane of the second terminal part (4).

9. Battery cell connector according Claim 1, **characterised in that** the first terminal part (2) comprises a connecting region (12) formed from a third electrically conductive material on the side (B) facing away from the battery and/or that the connecting region (12) is flush with the surface of the first terminal part (2) facing away from the battery and or that the connecting region (12) is coated with the third metal and/or that the connecting region (12) is roller-plated with the third metal.

10. Battery cell connector according to Claim 1, **characterised in that** an opening (14) for the battery is arranged in at least one terminal part (2, 4).

11. Battery cell connector according to Claim 2, **characterised in that** the flat piece (8) comprises an opening (14c) coaxial with a welding opening (14a) in the second terminal part (4) and/or that a battery is connected at least partially along the outer circumference of the opening (14c) materially bonded to the flat piece (8) and/or that the welding opening (14a) of the second terminal part (4) is larger than the positioning opening (14b) of the first terminal part (2), and **in that** the size of the positioning opening (14c) of the flat piece (8) corresponds to the size of the positioning opening (14b) of the first terminal part (2).

12. Battery cell connector according to Claim 1, **characterised in that** at least one terminal part is soft-annealed, and/or that the connecting part (6) is partially or completely soft-annealed.

13. Battery cell connector according to Claim 1, **characterised in that** the connecting part (6) is tapered in longitudinal section in a part substantially extending perpendicularly to the lengthwise direction.

14. Battery cell connector according to Claim 1, **characterised in that** the connecting part (6) comprises at least two bending radii of more than 90° in longitudinal section.

15. Battery cell connector according to Claim 1, **characterised in that** the connecting part (6) comprises mutually spaced ribs (6a) and/or that the ribs (6a) are coplanar at least with the side (B) of the first terminal part (2) and/or of the second terminal part (4) facing away from the battery and/or that the ribs (6a) are formed so as to project from the plane of the at least one terminal part (2, 4) and/or that the ribs (6a) are formed from the connecting part (6) by one of the methods:
A) stamping,
B) cutting,
C) laser cutting,
D) water-jet cutting.

16. Method for producing a battery cell connector according to Claim 1, comprising
- formation of a first terminal part (2) made of a first electrically conductive material,
- formation of a second terminal part (4),
- forming a Z-shape in cross-section of a connecting part (6) which connects the terminal parts such that the connecting part (6) is elastically deformable in at least two spatial directions, wherein the connecting part (6) comprises at least one corrugation ridge and one corrugation trough in longitudinal cross-section, and wherein the corrugation ridge and the corrugation trough respectively lie outside the plane of at least one of the terminal parts,
- materially bonding a flat piece (6), formed from an electrically conductive material, materially bonded on a side (A) of the second terminal part (4) facing towards a battery terminal.

17. System with
- at least two batteries (20) arranged oppositely poled next to one another, the oppositely poled battery terminals (22, 24) of two batteries (20) respectively being arranged subject to tolerance in a terminal region (26), the battery terminals (22) of a first polarity being formed from a first electrically conductive material and battery terminals (24) of a second polarity being formed from a second electrically conductive material, and
- at least one battery cell connector according to Claim 2, which is connected by a first terminal part (2) with a material fit to a first battery terminal (22) of a first polarity of the first battery (20) and is connected by the flat piece (6) with a material fit to a second battery terminal (24), of a second polarity of a second battery (20), which is assigned to the first battery terminal (22).

## Revendications

1. Connecteur de cellule de batterie, avec
- un premier élément de raccordement (2) destiné au raccord sur une borne de batterie d'une première batterie,
- un deuxième élément de raccordement (4),
- un élément de connexion (6) disposé entre les éléments de raccordement (2, 4) et contactant électriquement les éléments de raccordement (2, 4),
**caractérisé en ce que**
- l'élément de connexion (6) présente un segment longitudinal en forme de Z entre les éléments de raccordement (2, 4) de sorte que l'élément de connexion est élastique dans au moins deux directions spatiales,
- où l'élément de connexion (6) présente deux éléments extérieurs, qui sont agencés chaque fois angulairement par rapport à une large surface des éléments de raccordement (2, 4), où
- un premier élément extérieur est disposé avec un angle β par rapport à la large surface du premier élément de raccordement (2) et un deuxième élément extérieur est disposé avec un angle α par rapport à la large surface du deuxième élément de raccordement (4), et
- où les angles α et β se situent dans l'intervalle allant de 1° à 10°,
- où l'élément de connexion (6) présente en direction longitudinale, au moins une crête d'ondulation et un creux d'ondulation, et
- où la crête d'ondulation et le creux d'ondulation se situent chaque fois, en dehors du plan d'au moins un des éléments de raccordement.

2. Connecteur de cellule de batterie selon la revendication 1, **caractérisé en ce que** le premier élément de raccordement (2) est formé d'un premier matériau conducteur de l'électricité, au moins sur la face (A) orientée vers une borne de batterie, et où sur le deuxième élément de raccordement (4) est formée par liaison de matière, une pièce plate (8) constituée d'un deuxième matériau conducteur de l'électricité différent du premier matériau conducteur de l'électricité, formée pour le branchement à une deuxième borne de batterie, au moins à la face (A) orientée vers la deuxième borne de batterie.

3. Connecteur de cellule de batterie selon la revendication 2, **caractérisé en ce que** la face de la pièce plate (8) orienté vers la batterie et le premier élément de raccordement (2) sont coplanaires.

4. Connecteur de cellule de batterie selon la revendication 1, **caractérisé en ce que** l'élément de connexion (6) et le premier et/ou le deuxième élément de raccordement (2, 4) ne forment qu'une pièce.

5. Connecteur de cellule de batterie selon la revendication 1, **caractérisé en ce que** le au moins un élément de raccordement (2, 4) est formé ou revêtu de
a) aluminium,
b) étain,
c) zinc,
d) cuivre,
e) argent,
ou d'un alliage de ceux-ci.

6. Connecteur de cellule de batterie selon la revendication 2, **caractérisé en ce que** la pièce plate (8) est formée ou revêtue de
a) aluminium,
b) étain,
c) zinc,
d) cuivre,
e) argent,
ou d'un alliage de ceux-ci.

7. Connecteur de cellule de batterie selon la revendication 1, **caractérisé en ce que** l'élément de connexion (6) est formé d'au moins deux feuilles (6b) ou d'un parmi
a) un câble en aluminium,
b) un câble en cuivre,
c) un entrelacs en aluminium,
d) un entrelacs en cuivre.

8. Connecteur de cellule de batterie selon la revendication 1, **caractérisé en ce que** l'élément de connexion (6), le premier élément de raccordement (2) et/ou le deuxième élément de raccordement (4) forment un décalage (10) entre un plan du premier élément de raccordement (2) et un plan du deuxième élément de raccordement (4).

9. Connecteur de cellule de batterie selon la revendication 1, **caractérisé en ce que** le premier élément de raccordement (2) présente une zone de connexion (12) formée d'un troisième matériau conducteur de l'électricité sur la face opposée à la batterie, et/ou **en ce que** la zone de connexion (12) est alignée dans le plan de la face opposée à la batterie du premier élément de raccordement (2), et/ou **en ce que** la zone de connexion (12) est revêtue d'un troisième métal, et/ou **en ce que** la zone de connexion (12) est plaquée d'un troisième métal.

10. Connecteur de cellule de batterie selon la revendication 1, **caractérisé en ce qu'**une ouverture (14) pour la batterie est agencée dans au moins un élément de raccordement (2, 4).

11. Connecteur de cellule de batterie selon la revendication 2, **caractérisé en ce que** la pièce plate (8) présente une ouverture de positionnement (14c) coaxiale à une ouverture de soudure (14a) dans le deuxième élément de raccordement (4), et/ou **en ce qu'**une batterie est reliée par liaison de matière à la pièce plate (8), au moins partiellement le long de la périphérie extérieure de l'ouverture (14c) et/ou **en ce que** l'ouverture de soudure (14a) du deuxième élément de raccordement (4) est plus grande que l'ouverture de positionnement (14b) du premier élément de raccordement (2) et **en ce que** la taille de l'ouverture de positionnement (14c) de la pièce plate (8) correspond à la taille de l'ouverture de positionnement (14b) du premier élément de raccordement (2).

12. Connecteur de cellule de batterie selon la revendication 1, **caractérisé en ce qu'**au moins un élément de raccordement est recuit et/ou **en ce que** l'élément de connexion (6) est entièrement ou partiellement recuit.

13. Connecteur de cellule de batterie selon la revendication 1, **caractérisé en ce que** l'élément de connexion (6) est effilé en coupe longitudinale dans une partie essentiellement perpendiculaire à la direction d'extension.

14. Connecteur de cellule de batterie selon la revendication 1, **caractérisé en ce que** l'élément de connexion (6) présente en coupe longitudinale, au moins deux rayons de courbure de plus de 90°.

15. Connecteur de cellule de batterie selon la revendication 1, **caractérisé en ce que** l'élément de connexion (6) présente des nervures (6a) distantes l'une de l'autre, et/ou **en ce que** les nervures (6a) sont coplanaires au moins avec la face (B) opposée à la batterie du premier élément de raccordement (2) et/ou du deuxième élément de raccordement (4) et/ou **en ce que** les nervures (6a) font saillie du plan d'au moins un élément de raccordement (2, 4) et/ou **en ce que** les nervures (6a) sont formées sur l'élément de connexion (6) par l'un des procédés suivants :
a) emboutissage,
b) découpe,
c) découpe au laser,
d) découpe par jet d'eau.

16. Procédé de fabrication d'un connecteur de cellule de batterie selon la revendication 1,
- moulage d'un premier élément de raccordement (2) en un premier matériau conducteur de l'électricité,
- moulage d'un deuxième élément de raccordement (4),
- moulage en Z en coupe longitudinale d'un élément de connexion (6) reliant les éléments de raccordement, de sorte que l'élément de connexion est élastique dans au moins deux directions spatiales, où l'élément de connexion (6) présente en coupe longitudinale, au moins une crête d'ondulation et un creux d'ondulation, et où la crête d'ondulation et le creux d'ondulation se situent chaque fois, en dehors du plan d'au moins un des éléments de raccordement,
- liaison par matière d'une pièce plate (8) formée d'un matériau conducteur de l'électricité sur une face (A) orientée vers une borne de batterie du deuxième élément de raccordement (4).

17. Système consistant en
- au moins deux batteries (20) agencées par pôles opposés, où les bornes de batterie (22, 24) de pôles opposés de chaque fois deux batteries (20) sont agencés dans une zone de raccordement (26) avec tolérance et où les bornes de batterie (22) d'une première polarité sont formées en un premier matériau conducteur de l'électricité et les bornes de batterie (24) d'une deuxième polarité sont formées d'un deuxième matériau conducteur de l'électricité, et au moins un connecteur de cellule de batterie selon la revendication 2, qui est connecté par un premier élément de raccordement (2) à une première borne de batterie (22) d'une première polarité d'une première batterie (20) et connecté par la pièce plate (8) à une deuxième borne de batterie (24) orientée vers la première borne de batterie (22), la deuxième borne ayant une deuxième polarité d'une deuxième batterie (20).
